# EUROPÄISCHE PATENTSCHRIFT

(11) **EP 3 740 741 B1**
(45) Veröffentlichungstag und Bekanntmachung des Hinweises auf die Patenterteilung: **22.06.2022**
(21) Anmeldenummer: 18829317.9
(22) Anmeldetag: 18.12.2018
(51) Int. Cl.: G01F 23/24, G01F 23/263

(54) **SONDENEINHEIT**
PROBE UNIT
UNITÉ DE SONDE

(30) Priorität: 19.01.2018 DE 102018101206
(43) Veröffentlichungstag der Anmeldung: 25.11.2020
(73) Patentinhaber: Endress+Hauser SE+Co. KG, 79689 Maulburg (DE)
(72) Erfinder: LINIGER, Jeannette, CH-8952 Schlieren (CH); SCHMIDT, Robert, 79650 Schopfheim (DE); FERRARO, Franco, 79650 Schopfheim (DE); BECHTEL, Gerd, 79585 Steinen (DE); HUWYLER, Willy, 6330 Cham (CH)
(74) Vertreter: Andres, Angelika Maria
(86) Internationale Anmeldenummer: PCT/EP2018/085471
(87) Internationale Veröffentlichungsnummer: WO 2019/141464

(56) Entgegenhaltungen:
- EP-A1- 1 754 961
- US-A- 2 754 457
- US-A- 4 855 706
- US-A- 5 477 727
- US-A- 5 532 527

## Beschreibung

Die Erfindung betrifft eine Sondeneinheit für eine kapazitive und/oder konduktive Vorrichtung zur Bestimmung und/oder Überwachung zumindest einer Prozessgröße eines Mediums in einem Behältnis. Bei der Prozessgröße handelt es sich beispielsweise um einen Füllstand des Mediums in dem Behälter, um die elektrische Leitfähigkeit des Mediums oder auch um die Permittivität des Mediums. Im Falle einer Füllstandsmessung kann es sich sowohl um eine kontinuierliche Füllstandsbestimmung als auch um das Erkennen eines vorgebbaren Grenzstands handeln. Bei dem Behältnis handelt es sich wiederum beispielsweise um einen Behälter oder um eine Rohrleitung.

Auf dem kapazitiven und/oder konduktiven Messprinzip beruhende Feldgeräte sind an sich aus dem Stand der Technik bekannt und werden von der Anmelderin in vielen unterschiedlichen Ausgestaltungen hergestellt und beispielsweise unter den Bezeichnungen Liquicap, Solicap oder Liquipoint vertrieben. Kapazitive bzw. konduktive Messgeräte weisen in der Regel eine im Wesentlichen zylindrische Sensoreinheit mit zumindest einer Sensorelektrode auf, welche zumindest teilweise in einen Behälter einbringbar ist. Einerseits sind, insbesondere zur kontinuierlichen Füllstandsmessung, vertikal in den Behälter hineinreichende stabförmige Sensoreinheiten weitverbreitet. Zur Erkennung eines Grenzstandes sind jedoch auch in die Seitenwandung eines jeweiligen Behälters einbringbare Sensoreinheiten bekannt geworden.

Während des Messbetriebs wird die Sensoreinheit mit einem Anregesignal, in der Regel in Form eines Wechselstromsignals, beaufschlagt. Aus dem von der Sensoreinheit empfangenen Antwortsignal kann anschließend die jeweilige Prozessgröße bestimmt werden. Gemäß dem kapazitiven Messprinzip wird die Abhängigkeit des Antwortsignals von der Kapazität des von der Sensorelektrode und der Wandung des Behälters, oder des von der Sensorelektrode und einer zweiten Elektrode gebildeten Kondensators ausgenutzt. Je nach Leitfähigkeit des Mediums bildet entweder das Medium selbst oder eine Isolierung der Sensorelektrode das Dielektrikum dieses Kondensators.

Zur Auswertung des von der Sensoreinheit empfangenen Antwortsignals in Bezug auf den Füllstand kann dann beispielsweise entweder eine Scheinstrommessung oder auch eine Admittanzmessung durchgeführt werden. Bei einer Scheinstrommessung wird der Betrag des durch die Sensoreinheit fließenden Scheinstroms gemessen. Da der Scheinstrom jedoch an sich einen Wirk- und einem Blindanteil aufweist, wird im Falle einer Admittanzmessung neben dem Scheinstrom der Phasenwinkel zwischen dem Scheinstrom und der an der Sensoreinheit anliegenden Spannung gemessen. Die zusätzliche Bestimmung des Phasenwinkels erlaubt es darüber hinaus Aussagen über eine mögliche Ansatzbildung zu treffen, wie beispielsweise aus der DE102004008125A1 bekannt geworden ist.

Beim konduktiven Messprinzip wird dagegen detektiert, ob über das jeweils bei Anwendung des konduktiven Messprinzips verwendete, leitfähige Medium ein elektrischer Kontakt zwischen einer Sondenelektrode und der Wandung eines leitfähigen Behälters oder einer zweiten Elektrode besteht.

Feldgeräte in Form von Multisensoren, welche sowohl in einem kapazitiven als auch in einem konduktiven Betriebsmodus arbeiten können, sind beispielsweise aus den Dokumenten DE102011004807A1, DE102013102055A1 oder DE102014107927A1 bekannt geworden. Neben der Prozessgröße Füllstand lassen sich mittels eines derartigen Multisensors verschiedene medienspezifische Eigenschaften, wie die elektrische Leitfähigkeit des Mediums, oder auch dielektrische Eigenschaften des Mediums, wie beispielsweise dessen Dielektrizitätskonstante, bestimmen, wie in der DE102013104781A1 beschrieben.

Ein wohlbekanntes Problem im Zusammenhang mit kapazitiven und/oder konduktiven Feldgeräten ist die Bildung von Ansatz im Bereich der Sensoreinheit, welcher die jeweiligen Messergebnisse deutlich verfälschen kann. Zur Vermeidung von Ansatz kann einerseits eine möglichst hohe Frequenz für das Anregesignal gewählt werden, da grundsätzlich der verfälschende Einfluss eines Ansatzes mit zunehmender Frequenz des Anregesignals abnimmt. Eine Elektronik eines entsprechenden Feldgeräts für hohe Frequenzen passend auszulegen, ist jedoch einerseits mit einem erhöhten Grad an Komplexität verbunden. Darüber hinaus ist der zusätzliche Kostenfaktor für die jeweils benötigten Komponenten nicht vernachlässigbar.

Alternativ ist es bekannt geworden, eine Zusatzelektrode, insbesondere eine sogenannte Guardelektrode, wie beispielsweise in der DE3212434C2 beschrieben, zu verwenden. Die Guardelektrode ist dabei koaxial um die jeweilige Sensorelektrode angeordnet und von dieser durch eine Isolierung elektrisch getrennt. Sie liegt ferner auf dem gleichen Potential wie die Sensorelektrode.

Zur Herstellung der jeweiligen Sensoreinheiten sind unterschiedlichste Verfahren bekannt geworden. In dem aus der DE-C2744820 bekannten Verfahren umfasst die Sensoreinheit ein im Wesentlichen stabförmiges Sondengehäuse mit axialem Innenraum, in welchem Sondengehäuse eine flächige Elektrode angeordnet ist. Zunächst wird ein Metallrohr innen und außen mit einer Kunststoffschicht umspritzt. Dann wird eine Sondenelektrode mit einem Metalldraht verbunden und auf einen Isolierkörper geschoben, welche wiederum auf einen Gewindeabschnitt des Metallrohrs aufgeschraubt wird. Am Ende wird die gesamte Anordnung erneut mit Kunststoff umspritzt.

Bei der Sondeneinheit gemäß der DE-C3328210 besteht das Sondengehäuse wiederum aus einem rohrförmigen Hauptteil und einer becherförmigen Kappe. Im Inneren des Gehäuses sind drei Elektroden angeordnet, wovon eine erste Elektrode die Form eines flachen in der Kappe enganliegenden Topfes und die zweite und dritte Elektrode jeweils rohrförmig ausgestaltet sind. Die erste Elektrode dient dann als Messelektrode, während den beiden anderen Elektroden Schirmfunktionen zukommen. Die Elektroden sind in dem Gehäuse durch Abstandshalter voneinander beabstandet angeordnet und elektrisch gegeneinander isoliert.

Schließlich ist aus der EP0926474T1 eine Sondeneinheit bekannt geworden, bei dem in einem axialen, konischen Innenraum eines im Wesentlichen stabförmigen Sondengehäuse ein in radialer Richtung kompressibler Klemmkonus angeordnet ist. Auf dem Klemmkonus ist mindestens eine flächige Elektrode angeordnet, welche durch den Klemmkonus flächig und spaltfrei gegen eine Wand des Sondengehäuses gepresst ist. Die in der EP0926474T1 beschriebene Sondeneinheit hat den Vorteil, dass die Sondeneinheit ohne Spezialwerkzeug montiert werden und kostengünstig herstellbar ist. Trotz der durch den Klemmkonus erzielbaren Vereinfachung handelt es sich bei der beschriebenen Sondeneinheit noch um einen vergleichsweise komplexen Aufbau. Beispielsweise muss stets auf geeignete Art und Weise, beispielsweise durch geeignete konstruktive Maßnahmen, gewährleistet sein, dass im Falle mehrerer Elektroden die Elektroden voneinander elektrisch isoliert sind.

Kapazitive Messsonden sind aus der US 2 754 457 und der US 5 477 727 bekannt geworden.

Ausgehend vom genannten Stand der Technik liegt der vorliegenden Erfindung die Aufgabe zugrunde, den Aufbau einer Sondeneinheit für ein kapazitives und/oder konduktives Messgerät weiter zu vereinfachen.

Diese Aufgabe wird gelöst durch eine Sondeneinheit nach Anspruch 1 und eine Vorrichtung nach Anspruch 7.

Bezüglich der Sondeneinheit wird die Aufgabe gelöst durch eine Sondeneinheit für eine kapazitive und/oder konduktive Vorrichtung zur Bestimmung und/oder Überwachung zumindest einer Prozessgröße eines Mediums in einem Behältnis. Die Sondeneinheit umfasst einen stabförmigen Sondenkörper, welcher in Form eines Hohlkörpers, insbesondere mit einer zylindrischen Wandung, ausgestaltet ist, aus einem elektrisch isolierenden Material gefertigt ist, und ein Innenvolumen aufweist. Die Sondeneinheit umfasst außerdem zumindest eine um die Wandung des Sondenkörpers herum, insbesondere lösbar, anbringbare, ringförmige Elektrode, und zumindest eine Befestigungseinheit, welche dazu ausgestaltet ist, die zumindest eine Elektrode an einer vorgebbaren Position an dem Sondenkörper, insbesondere lösbar, zu befestigen.

Die Befestigungseinheit ist dazu ausgestaltet, die zumindest eine ringförmige Elektrode an dem Sondenkörper in einer vorgebbaren Position, insbesondere entlang einer Längsachse durch den Sondenkörper, zu befestigen. Bevorzugt ist die Befestigungseinheit zumindest teilweise integraler Bestandteil des Sondenkörpers. Durch die Befestigungseinheit ist die erfindungsgemäße Sondeneinheit einfach herzustellen und insbesondere besonders einfach und ohne Spezialwerkzeug montierbar.

Die ringförmige Ausgestaltung der zumindest einen Elektrode ist ferner insbesondere messtechnisch von Vorteil. Für Sondeneinheiten aus dem Stand der Technik weisen flächig ausgestaltete Elektroden, welche um den Sondenkörper herum angebracht werden, häufig einen Schlitz auf. Erfindungsgemäß kann dagegen eine durchgängige, ringförmige Elektrode verwendet werden, was insbesondere vorteilhaft in Bezug auf die sich jeweils ausbildenden elektrischen Felder zwischen den Elektroden oder der Elektrode und der Wandung im Falle der Verwendung des kapazitiven Messprinzips ist.

Die erfindungsgemäße Sondeneinheit beinhaltet, dass zumindest eine Öffnung im Bereich des Sondenkörpers vorgesehen ist, welche im Bereich der zumindest einen Elektrode angeordnet ist und durch welche eine elektrische Verbindung zwischen der Elektrode und zumindest einer weiteren Komponente der Vorrichtung, insbesondere einer Leiterplatte, welche in ein Innenvolumen des Sondenkörpers einbringbar ist, herstellbar ist. Die Elektroden sind dabei jeweils in einem äußeren Bereich des Sondenkörpers angeordnet, und können über die zumindest eine Öffnung elektrisch mit den sich jeweils innerhalb des Sondenkörpers befindenden Komponenten, insbesondere Leiterplatten, verbunden werden.

Erfindungsgemäß weist die zumindest eine Elektrode eine Kontaktlasche auf, welche von der Elektrode in das Innenvolumen des Sondenkörpers führt, wenn die Elektrode am Sondenkörper befestigt ist. Gegenüber einfachen Kontaktdrähten kann auf diese Weise eine erhöhte Stabilität des elektrischen Kontaktes zwischen der jeweiligen Elektrode und der im Inneren des Sondengehäuses angeordneten Komponente erreicht werden.

Bezüglich der Befestigungseinheit beinhaltet eine Ausgestaltung, dass die Befestigungseinheit zumindest ein Schnappelement aufweist. Hierbei handelt es sich insbesondere um ein Element welches zumindest eine erste und eine zweite Position einnehmen kann, und welches zur Befestigung der jeweiligen Elektrode von der ersten in die zweite Position schnappt. Auf diese Weise kann eine lösbare Befestigung der jeweiligen Elektrode an dem Sondengehäuse erreicht werden.

Bezüglich des Schnappelements ist es hiervon Vorteil, wenn in einer ersten Position des Schnappelements die Elektrode um den Sondenkörper herum anbringbar ist, und wobei in einer zweiten Position des Schnappelements eine Befestigung, insbesondere Fixierung bzw. eine Befestigung, der Elektrode in der vorgebbaren Position an dem Sondenkörper erfolgt.

Bezüglich der Elektroden ist es wiederum von Vorteil, wenn es sich bei der zumindest einen Elektrode um ein Gussteil, ein Drehteil, oder um ein ringförmiges Blech handelt. Entsprechende Teile sind besonders einfach und kostengünstig herstellbar.

Eine weitere besonders bevorzugte Ausgestaltung beinhaltet, dass die Sondeneinheit zumindest zwei Elektroden umfasst, wobei eine erste Elektrode mittels einer ersten Befestigungseinheit an einer ersten vorgebbaren Position an dem Sondenkörper befestigbar ist, und wobei eine zweite Elektrode mittels einer zweiten Befestigungseinheit an einer zweiten vorgebbaren Position an dem Sondenkörper befestigbar ist. Die erste Elektrode dient dann bevorzugt als Messelektrode und die zweite beispielsweise als Guardelektrode.

In dieser Hinsicht ist es von Vorteil, wenn die beiden Befestigungseinheiten derart angeordnet und ausgestaltet sind, dass die erste und die zweite Elektrode elektrisch voneinander isoliert sind, insbesondere einen vorgebbaren Abstand zueinander aufweisen.

Erfindungsgemäß ist der Sondenkörper aus einem elektrisch isolierenden Material gefertigt.

Die der Erfindung zugrundeliegende Aufgabe wird ferner gelöst durch eine Vorrichtung zur kapazitiven und/oder konduktiven Bestimmung und/oder Überwachung zumindest einer Prozessgröße eines Mediums in einem Behältnis umfassend eine erfindungsgemäße Sondeneinheit.

Es sei darauf verwiesen, dass die in Zusammenhang mit dem erfindungsgemäßen Sondeneinheit beschriebenen Ausgestaltungen sich mutatis mutandis auch auf die erfindungsgemäße Vorrichtung anwenden lassen.

Die Erfindung wird nun anhand der nachfolgenden Figuren Fig. 1 - Fig. 2 genauer beschrieben. Es zeigt:
Fig. 1 eine schematische Darstellung eines kapazitiven Füllstandsmessgeräts gemäß Stand der Technik, und
Fig. 2 eine bevorzugte Ausgestaltung für eine erfindungsgemäße Sondeneinheit.

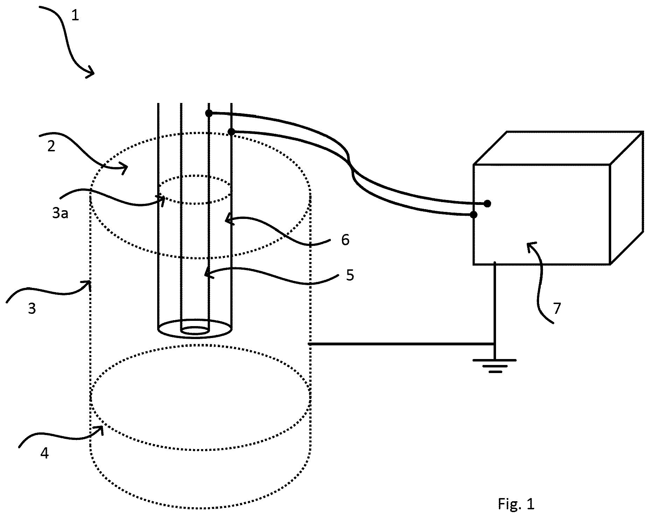

In Fig. 1 ist eine schematische Zeichnung eines typischen auf dem kapazitiven Messprinzip beruhenden Feldgeräts 1 gemäß Stand der Technik gezeigt. Das Beispiel zeigt eine Sondeneinheit 2 mit zwei zylinderförmig ausgestalteten Elektroden 5, 6, welche von der über einen Prozessanschluss 3a von der Oberseite ausgehend in einen teilweise mit Medium 4 gefüllten Behälter 3 hineinragt. Es versteht sich jedoch von selbst, dass zahlreiche Ausgestaltungen für ein kapazitives Messgerät 1 mit unterschiedlicher Anzahl und Ausgestaltung der Elektroden 5,6 bekannt sind, welche allesamt unter die vorliegende Erfindung fallen. Neben solchen Messgeräten 1, bei welchen die Sondeneinheit 2, wie in Fig. 1 dargestellt, von oben in den Behälter 3 hineinragen, ist die vorliegende Erfindung auch auf solche Sondeneinheiten 3 anwendbar, welche über eine Seitenwandung des Behälters 3 in diesen eingebracht werden.

Die Sondeneinheit 2 selbst umfasst im vorliegenden Beispiel eine als Messelektrode dienende Sondenelektrode 5 und eine die Sensorelektrode 5 koaxial umgebende, von dieser isolierte Guardelektrode 6. Beide Elektroden 5,6 sind elektrisch mit einer Elektronikeinheit 7 verbunden, welche unter anderem für die Signalerfassung, - auswertung und/oder-speisung verantwortlich ist. Zur Bestimmung der jeweiligen Prozessgröße wird zumindest die Sondenelektrode 5 mit einem Anregesignal A beaufschlagt und die Prozessgröße wird anhand des von der Sondenelektrode 5 empfangenen Empfangssignals E ermittelt, welches üblicherweise die Form eines Wechselstroms hat.

Die Guardelektrode 6 wird dabei bevorzugt, wie beispielsweise in der DE 32 12 434 C2 beschrieben, auf dem gleichen Potential wie die Sensorelektrode 5 betrieben. Es sei jedoch darauf verwiesen, dass eine Guardelektrode 6 für ein kapazitives und/oder konduktives Messgerät 1 jedoch keineswegs zwingend notwendig ist.

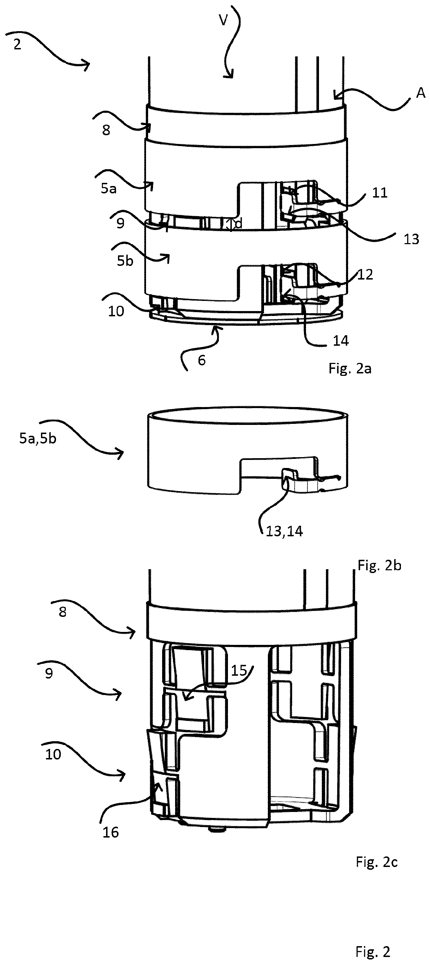

Mit der vorliegenden Erfindung wird eine Sondeneinheit 2 für ein kapazitives und/oder konduktives Messgerät 1 vorgeschlagen, welches einen besonders einfachen Aufbau aufweist. Eine beispielhafte, besonders bevorzugte Ausgestaltung einer erfindungsgemäßen Sondeneinheit 2 ist Gegenstand von Fig. 2.

Fig. 2a zeigt eine perspektivische Ansicht der Sondeneinheit 2. Die Sondeneinheit 2 umfasst einen stabförmigen Sondenkörper 8. Der Sondenkörper 8 ist im vorliegenden Beispiel zylindrisch ausgestaltet und vorzugsweise aus einem elektrisch isolierenden Material gefertigt. Es handelt sich dabei um einen Hohlkörper mit einem Innenvolumen V. Im Innenvolumen V können beispielsweise einzelne Komponenten [nicht gezeigt] der Vorrichtung 1, insbesondere Leiterplatten, angeordnet sein. Um die Mantelfläche A des Sondenkörpers 8 herum sind zwei ringförmige Elektroden 5a,5b angeordnet. Dabei handelt es sich um zwei in Form von geschlossenen Ringen vorliegende, metallisch leitfähige, flächige Elemente, beispielsweise um Gussteile, Drehteile, oder auch geschlossene, ringförmige Bleche. Darüber hinaus umfasst die Sondeneinheit 2 eine dritte Elektrode 6, welche flächig ausgestaltet, und an einer Stirnfläche des Sondenkörpers 8 angebracht ist. In anderen Ausgestaltungen einer erfindungsgemäßen Sondeneinheit 2 können auch lediglich zwei Elektroden, oder mehr als drei Elektroden vorgesehen sein. Es ist ferner sowohl denkbar, alle Elektroden ringförmig auszugestalten, wie im Falle der ersten und zweiten Elektrode 5a und 5b aus Fig. 2a, oder zumindest für eine der Elektroden eine alternative, beispielsweise planare, Ausgestaltung vorzusehen, wie im Falle der dritten Elektrode 6 aus Fig. 2a.

Die beiden ringförmigen Elektroden 5a,5b sind erfindungsgemäß jeweils mit einer Befestigungseinheit 9,10 an dem Sondenkörper 8 befestigt derart, dass sie automatisch einen vorgebbaren Abstand d zueinander aufweisen. Vorteilhaft lassen sich die ringförmigen beiden Elektroden 5a, 5b im Falle der vorliegenden Erfindung auf einfache Art und Weise jeweils an einer vorgebbaren Position an dem Sondenkörper 8 befestigen. Durch die Befestigung an der jeweiligen vorgebbaren Position wird erreicht, dass die Elektroden 5a,5b automatisch elektrisch voneinander isoliert sind. Hierzu sind keine komplizierten Arbeitsschritte oder spezielle Bauteile notwendig.

Der Sondenkörper 8 weist ferner zwei Öffnungen 11,12 auf, welche jeweils im Bereich einer der ringförmigen Elektroden 5a,5b angeordnet sind. Durch die jeweilige Öffnung 11,12 kann eine elektrische Verbindung der jeweiligen Elektrode 5a,5b mit einer Komponente der Vorrichtung 1, welche sich im Innenvolumen V des Sondenkörpers 8 befindet, hergestellt werden. Dabei handelt es sich insbesondere um eine Komponente der Vorrichtung 1, insbesondere der Elektronikeinheit 7, beispielsweise um eine Leiterplatte. Es ist von Vorteil, wenn für jede Elektrode 5a,5b je eine Befestigungseinheit 9,10 und eine Öffnung 11,12 vorgesehen ist.

Eine vergrößerte Ansicht einer erfindungsgemäßen, ringförmigen Elektrode 5a,5b ist in Fig. 2b wiedergegeben. Jede Elektrode 5a,5b verfügt in der gezeigten Ausgestaltung über eine Kontaktlasche 13,14, welche derart ausgestaltet ist, dass in das Innenvolumen V des Sondenkörpers 8 führt, wenn die Elektrode 5a,5b am Sondenkörper 8 befestigt ist. Der Durchmesser der Elektroden 5a,5b ist ferner jeweils an den Durchmesser des Sondenkörpers 8 angepasst, derart, dass die Elektroden 5a,5b im Wesentlichen passgenau um den Sondenkörper 8 herum angebracht werden können. Insbesondere kann das Auftreten eines Luftspalts zwischen der jeweiligen Elektrode 5a, 5b und dem Sondenkörper 8 vermieden werden.

Im vorliegenden Beispiel sind die beiden Befestigungseinheiten 9,10 in den Sondenkörper 8 integriert, wie am besten aus Fig. 2c ersichtlich ist. Jede Befestigungseinheit 9,10 verfügt über mehrere Schnappelemente 15,16. In anderen Ausgestaltungen können andere Befestigungsweisen realisiert werden. Auch ist es denkbar, nur ein einziges Schnappelement 15,16 pro Befestigungseinheit 9,10 zu verwenden. Schnappelemente 15,16 bieten den Vorteil, dass die Elektroden 5a,5b lösbar am Sondenkörper 8 angebracht werden können. In einer ersten Position der jeweiligen Schnappelemente 15,16 kann die jeweilige Elektrode 5a,5b über den Sondenkörper 8 geschoben werden.

### Bezugszeichenliste

- 1: Messgerät
- 2: Sondeneinheit
- 3: Behälter
- 3a: Öffnung im Behälter
- 4: Medium
- 5a,5b: erste und zweite ringförmige Elektrode
- 6: dritte, planare Elektrode
- 7: Elektronikeinheit
- 8: Sondenkörper
- 9,10: Befestigungseinheit
- 11,12: Öffnungen im Sondenkörper
- 13,14: Kontaktlaschen der Elektroden
- 15, 16: Schnappelemente

- A: Anregesignal
- E: Empfangssignal
- V: Innenvolumen des Sondenkörpers

## Patentansprüche

1. Sondeneinheit (2) für eine kapazitive und/oder konduktive Vorrichtung (1) zur Bestimmung und/oder Überwachung zumindest einer Prozessgröße eines Mediums (4) in einem Behältnis (3), umfassend
einen stabförmigen Sondenkörper (8), welcher in Form eines Hohlkörpers, insbesondere mit einer zylindrischen Wandung, ausgestaltet ist, aus einem elektrisch isolierenden Material gefertigt ist, und ein Innenvolumen (V) aufweist,
zumindest eine um die Wandung des Sondenkörpers herum anbringbare, ringförmige Elektrode (5a,5b), und
zumindest eine Befestigungseinheit (9,10), welche dazu ausgestaltet ist, die zumindest eine Elektrode (5a,5b) an einer vorgebbaren Position an dem Sondenkörper (8) zu befestigen, **dadurch gekennzeichnet, dass**
zumindest eine Öffnung (11,12) im Bereich des Sondenkörpers (8) vorgesehen ist, welche im Bereich der zumindest einen Elektrode (5a,5b) angeordnet ist und durch welche eine elektrische Verbindung zwischen der Elektrode (5a,5b) und zumindest einer weiteren Komponente der Vorrichtung (1), insbesondere einer Leiterplatte, welche in ein Innenvolumen (V) des Sondenkörpers (8) einbringbar ist, herstellbar ist,
wobei die zumindest eine Elektrode (5a,5b) eine Kontaktlasche (13,14) aufweist, welche von der Elektrode (5a,5b) in das Innenvolumen (V) des Sondenkörpers (8) führt, wenn die Elektrode (5a,5b) am Sondenkörper (8) befestigt ist.

2. Sondeneinheit (2) nach Anspruch 1,
wobei die Befestigungseinheit (9,10) zumindest ein Schnappelement (15,16) aufweist.

3. Sondeneinheit (2) nach Anspruch 2,
wobei in einer ersten Position des Schnappelements (15,16) die Elektrode (5a,5b) um den Sondenkörper (8) herum anbringbar ist, und wobei in einer zweiten Position des Schnappelements (15,16) eine Befestigung, insbesondere Fixierung, der Elektrode (5a,5b) in der vorgebbaren Position an dem Sondenkörper (8) erfolgt.

4. Sondeneinheit (2) nach zumindest einem der vorherigen Ansprüche,
wobei es sich bei der zumindest einen Elektrode (5a,5b) um ein Gussteil, ein Drehteil, oder um ein ringförmiges Blech handelt.

5. Sondeneinheit (2) nach zumindest einem der vorherigen Ansprüche,
umfassend zumindest zwei Elektroden (5a,5b), wobei eine erste Elektrode (5a) mittels einer ersten Befestigungseinheit (9) an einer ersten vorgebbaren Position an dem Sondenkörper (8) befestigbar ist, und wobei eine zweite Elektrode (5b) mittels einer zweiten Befestigungseinheit (10) an einer zweiten vorgebbaren Position an dem Sondenkörper (8) befestigbar ist.

6. Sondeneinheit (2) nach Anspruch 5,
wobei die beiden Befestigungseinheiten (9,10) derart angeordnet und ausgestaltet sind, dass die erste (5a) und die zweite Elektrode (5b) elektrisch voneinander isoliert sind, insbesondere einen vorgebbaren Abstand (d) zueinander aufweisen.

7. Vorrichtung (1) zur kapazitiven und/oder konduktiven Bestimmung und/oder Überwachung zumindest einer Prozessgröße eines Mediums (4) in einem Behältnis (3) umfassend eine Sondeneinheit (2) nach zumindest einem der vorherigen Ansprüche.

## Claims

1. Probe unit (2) for a capacitive and/or conductive apparatus (1) designed to determine and/or monitor at least a process variable of a medium (4) in a vessel (3), said probe unit comprising
a rod-shaped probe body (8), which is designed in the shape of a hollow body, particularly with a cylindrical wall, wherein said body is made from an electrically insulating material and has an interior volume (V),
at least an annular electrode (5a, 5b) which can be attached around the wall of the probe body, and
at least a fastening unit (9, 10), which is designed to fix the at least one electrode (5a, 5b) at a predeterminable position on the probe body (8),
**characterized in that**
at least one opening (11, 12) is provided in the area of the probe body (8), wherein said opening is arranged in the area of the at least one electrode (5a, 5b) and through said opening an electrical connection can be established between the electrode (5a, 5b) and at least another component of the apparatus (1), particularly a printed circuit board, which can be introduced into an interior volume (V) of the probe body (8),
wherein the at least one electrode (5a, 5b) has a contact tab (13, 14) which leads from the electrode (5a, 5b) into the interior volume (V) of the probe body (8) when the electrode (5a, 5b) is secured to the probe body (8).

2. Probe unit (2) as claimed in Claim 1,
wherein the fastening unit (9, 10) has at least a snap element (15, 16).

3. Probe unit (2) as claimed in Claim 2,
wherein, in a first position of the snap element (15, 16), the electrode (5a, 5b) can be attached around the probe body (8), and
wherein, in a second position of the snap element (15, 16), the electrode (5a, 5b) is fixed, particularly secured, in the predeterminable position on the probe body (8).

4. Probe unit (2) as claimed in at least one of the previous claims,
wherein the at least one electrode (5a, 5b) is a cast part, a turned part or an annular metal sheet.

5. Probe unit (2) as claimed in at least one of the previous claims,
comprising at least two electrodes (5a, 5b), wherein a first electrode (5a) can be fixed on the probe body (8) by means of a first fastening unit (9) at a first definable position, and a second electrode (5b) can be fixed on the probe body (8) by means of a second fastening unit (10) at a second predeterminable position.

6. Probe unit (2) as claimed in Claim 5,
wherein the two fastening units (9, 10) are arranged and designed in such a way that the first electrode (5a) and the second electrode (5b) are electrically isolated from one another, and particularly have a predeterminable distance (d) from one another.

7. Apparatus (1) designed to determine and/or monitor, in a capacitive and/or conductive manner, at least one process variable of a medium (4) in a vessel (3) comprising a probe unit (2) as claimed in at least one of the previous claims.

## Revendications

1. Unité de sonde (2) pour un dispositif capacitif et/ou conductif (1) destiné à la détermination et/ou à la surveillance d'au moins une grandeur de process d'un produit (4) dans un réservoir (3), laquelle unité de sonde comprend
un corps de sonde (8) en forme de tige, lequel corps est réalisé sous la forme d'un corps creux, notamment avec une paroi cylindrique, lequel corps est fabriqué en un matériau électriquement isolant et présente un volume intérieur (V),
au moins une électrode annulaire (5a, 5b) pouvant être placée autour de la paroi du corps de sonde, et
au moins une unité de fixation (9, 10), laquelle unité est conçue pour fixer l'au moins une électrode (5a, 5b) dans une position pouvant être prédéfinie sur le corps de sonde (8),
**caractérisée**
**en ce qu'**au moins une ouverture (11, 12) est prévue dans la zone du corps de sonde (8), laquelle ouverture est disposée dans la zone de l'au moins une électrode (5a, 5b) et à travers laquelle une liaison électrique peut être établie entre l'électrode (5a, 5b) et au moins un autre composant du dispositif (1), notamment une carte de circuit imprimé, laquelle peut être introduite dans un volume intérieur (V) du corps de sonde (8),
l'au moins une électrode (5a, 5b) comprenant une patte de contact (13, 14) qui mène de l'électrode (5a, 5b) dans le volume intérieur (V) du corps de sonde (8) lorsque l'électrode (5a, 5b) est fixée au corps de sonde (8).

2. Unité de sonde (2) selon la revendication 1,
pour laquelle l'unité de fixation (9, 10) présente au moins un élément d'encliquetage (15, 16).

3. Unité de sonde (2) selon la revendication 2,
pour laquelle, dans une première position de l'élément d'encliquetage (15, 16), l'électrode (5a, 5b) peut être placée autour du corps de sonde (8), et
pour laquelle, dans une deuxième position de l'élément d'encliquetage (15, 16), une fixation de l'électrode (5a, 5b) est effectuée dans la position prédéfinissable sur le corps de sonde (8).

4. Unité de sonde (2) selon au moins l'une des revendications précédentes, pour laquelle ladite au moins une électrode (5a, 5b) est une pièce coulée, une pièce tournée ou une tôle annulaire.

5. Unité de sonde (2) selon au moins l'une des revendications précédentes, comprenant au moins deux électrodes (5a, 5b), une première électrode (5a) pouvant être fixée au corps de sonde (8) au moyen d'une première unité de fixation (9) dans une première position pouvant être prédéfinie, et une deuxième électrode (5b) pouvant être fixée au corps de sonde (8) au moyen d'une deuxième unité de fixation (10) dans une deuxième position pouvant être prédéfinie.

6. Unité de sonde (2) selon la revendication 5,
pour laquelle les deux unités de fixation (9, 10) sont disposées et conçues de telle sorte que la première électrode (5a) et la deuxième électrode (5b) sont isolées électriquement l'une de l'autre, notamment qu'elles présentent entre elles une distance (d) pouvant être prédéfinie.

7. Dispositif (1) destiné à la détermination et/ou à la surveillance capacitive et/ou conductive d'au moins une grandeur de process d'un produit (4) dans un réservoir (3) comprenant une unité de sonde (2) selon au moins l'une des revendications précédentes.
